Europäisches Patentamt

European Patent Office

Office européen des brevets

(11) Publication number: **0 118 573**
**B1**

(12) **EUROPEAN PATENT SPECIFICATION**

(45) Date of publication of patent specification: **02.03.88**

(21) Application number: **83102268.6**

(22) Date of filing: **08.03.83**

(51) Int. Cl.⁴: **G 05 D 23/19, B 60 H 1/32**

(54) A capacity control device for controlling a variable displacement compressor in an air conditioning system.

(43) Date of publication of application:
**19.09.84 Bulletin 84/38**

(45) Publication of the grant of the patent:
**02.03.88 Bulletin 88/09**

(84) Designated Contracting States:
**DE FR GB IT SE**

(56) References cited:
**DE-A-3 133 502**
**DE-A-3 210 884**
**DE-A-3 215 997**
**FR-A-2 193 184**
**GB-A-2 039 386**
**US-A-3 797 560**

(73) Proprietor: **SANDEN CORPORATION**
**20 Kotobuki-cho**
**Isesaki-shi Gunma-ken (JP)**

(72) Inventor: **Yasuji Tamura**
**803-27, Oaza Iwamatsu**
**Ojima-machi, Nitta-gun Gunma-ken (JP)**

(74) Representative: **Prüfer, Lutz H., Dipl.-Phys.**
**Harthauser Strasse 25d**
**D-8000 München 90 (DE)**

Courier Press, Leamington Spa, England.

**0 118 573**

## Description

This invention relates generally to a device for controlling the operation of an air conditioning system, and more particularly, to an electronic capacity control circuit for a variable displacement compressor in an automobile air conditioning system according to the preamble of Claim 1.

In conventional air conditioning systems known in the prior art, the air conditioning compressor is driven by a motor, either directly or through a magnetic clutch. Thermal control in the room or compartment is accomplished by the intermittent operation of the magnetic clutch or motor by a signal from a thermostat disposed in the room. Once the temperature in the room is lowered to the desired level, the supplemental cooling capacity of the air conditioner need not be as large for maintaining the desired temperature in the room. Therefore, after the room has been cooled to the desired temperature, conventional air conditioning compressors are intermittently operated in response to the thermostat signal. Compressors having large cooling capacities are operated even more intermittently because of the high amounts of energy required to drive such compressors.

In an air conditioning system for automobiles, the compressor is usually driven by the automobile engine. Because the r.p.m. of the automobile engine changes continuously, the rotation frequency of the compressor changes accordingly, resulting in rapid changes in the cooling capacity of the air conditioner. Automobile air conditioners are generally designed so that when the compressor is driven by the engine at normal driving speeds, the air conditioner operates at optimum capacity. Therefore, when the compressor is driven by the engine at lower operating speeds, or when the engine is idling, the cooling capacity of the air conditioner is insufficient to maintain adequate cooling of the vehicle. Conversely, when the compressor is driven at high operating speeds by the engine, cooling capacity is more than necessary.

One known device for controlling the excessive cooling capacity of air conditioning systems operates by reheating some of the cooled air generated by the air conditioner. Part of the air from the evaporator of the air conditioner is reheated in a heating unit. The reheated air is mixed with the remaining cooled air to control the temperature of the air which is ultimately blown into the room or compartment. In this device, the ratio of cooling capacity to heating capacity is controlled in response to the r.p.m. of the automobile engine. The above described device for controlling air temperature is complicated and considerable energy is wasted in reheating the cooled air.

In another known device for controlling the cooling capacity of an air conditioning system, the magnetic clutch connecting the compressor to the driving engine or motor is intermittently operated to control the operation of the compressor. However, because the magnetic clutch is often required to engage the driving engine at high operating speeds, sudden and deleterious forces are generated at the moment the clutch is engaged and are transmitted to the engine and compressor. The temperature of the air which is blown into the room or compartment also drastically changes upon engagement of the clutch and operation of the compressor.

From DE—A1—3 215 997 and DE—A1—3 210 884 a capacity control device for a compressor in an air conditioning system is known. This known control device comprises a variable displacement device for changing the capacity of the compressor by a servo motor which can be driven in both directions and a control circuit, which includes a temperature detector and comparators, which compare a signal from the temperature detector with threshold values corresponding to desired temperatures in order to generate a control signal for the variable displacement device.

The utilization of a microprocessor in an automatic control arrangement for controlling a variable capacity compressor for air conditioning systems is known from GB—A—2 039 386 and two signals for a count pulse and up/down mode selection are produced from a sensed signal provided by a temperature sensor.

From US—A—3 797 560 a control system for environmental conditional units is known, which comprises a control device including control units for generating a control signal as well as actuating means for actuating one of a plurality of environmental units in response to the control signal. The control means comprises a temperature detecting means and an up/down counting means for selectively carrying out count up operation and count down operation. The counting means are connected to the actuating means.

Finally, DE—A1—3 133 502 discloses the use of solenoid-operated valves in an air conditioning system.

It is the overall object of this invention to provide a control circuit for controlling the cooling capacity of an air conditioning system.

A specific object of this invention is to provide a control circuit for the cooling capacity of the air conditioning compressor as required by the cooling load which eliminates or reduces the generation of sudden and deleterious forces when the compressor engages the driving device and which improves the performance and efficiency of the air conditioning system.

The present invention is directed to a device for controlling the cooling capacity of a compressor in an air conditioning system which is characterized by the features of the characterizing portion of claim 1.

The further objects, features and aspects of this invention will be understood from the following detailed description of the preferred embodiments of this invention referring to the annexed drawings in which:

2

# 0 118 573

Figure 1 is a schematic diagram of an air conditioning or refrigerating system in accordance with this invention;

Figure 2 is a graph of the refrigerating or cooling capacities of a variable displacement compressor which is used in the refrigerant circuit of Figure 1;

Figure 3 is a circuit diagram of an embodiment of a capacity control device for the compressor in Figure 1;

Figure 4 illustrates the waveforms of the signals at several points in the circuit of Figure 3;

Figure 5 is a flow chart illustrating the operation of the capacity control device of Figure 3;

Figure 6 is a flow chart illustrating the subroutine used in the flow diagram of Figure 5;

Figure 7 illustrates the changes in temperature of the blown air in relation to time;

Figure 8 illustrates the changes in temperature of the blown air in relation to compressor volume and time.

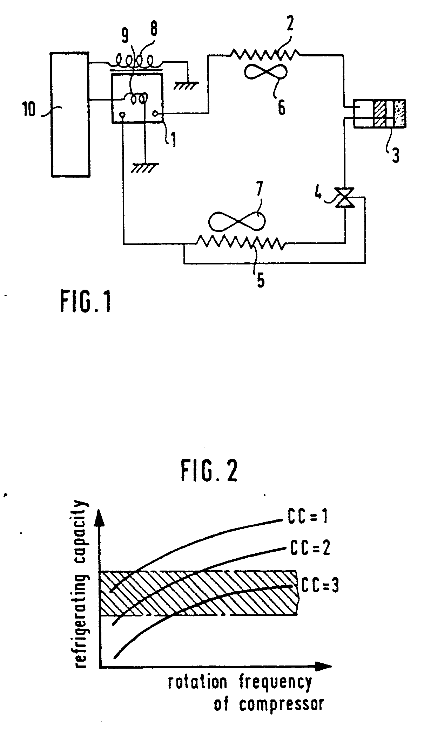

Referring to Figure 1, the basic construction of a refrigeration or air conditioning system, particularly an automobile air conditioning system, is diagrammatically shown. The air conditioning system comprises a compressor as generally indicated by reference number 1. Compressor 1 includes magnetic clutch 8 and variable displacement device 9 which are controlled by control circuit 10 as will be explained in greater detail below. The air conditioning system shown in Figure 1 further comprises condensor 2 and its associated fan 6, receiver and dryer 3, thermostatic expansion device or valve 4 and evaporator 5 and its associated fan 7. These basic components are coupled in series to form a conventional refrigeration circuit. Refrigerant gas is compressed in compressor 1 and supplied to condensor 2 where it is condensed to liquid refrigerant and cooled by forced ventilation of fan 6. The liquid refrigerant is accumulated in receiver and dryer 3, which removes the moisture and metal chips from the liquid refrigerant. The liquid refrigerant within the receiver and dryer 3 is delivered to thermostatic expansion valve 4. The refrigerant expands as it flows through valve 4 and emerges as a two-part mixture of liquid and gas, but primarily liquid. As the mixture flows through evaporator 5, which acts as a heat exchanger in conjunction with blower 7, which supplies air to the vehicle compartment, heat is transferred from the incoming air to the refrigerant and the entirety of the refrigerant vaporizes to a gaseous state. The refrigerant gas at the evaporator outlet is then passed to the suction inlet of compressor 1.

Compressor 1 is controlled by the operation of magnetic clutch 8 and variable displacement device 9. Magnetic clutch 8 is used to engage the compressor driving means and variable displacement device 9 is used for changing the cooling capacity of the compressor, both being controlled by the operation of control circuit 10 as will be described in further detail below.

Variable displacement device 9 may be used to change the cooling capacity of compressor 1 to one of three levels, i.e., $CC_1$, $CC_2$ or $CC_3$, as shown in Figure 2. Figure 2 illustrates the relationship of cooling capacity to rotation frequency of the compressor.

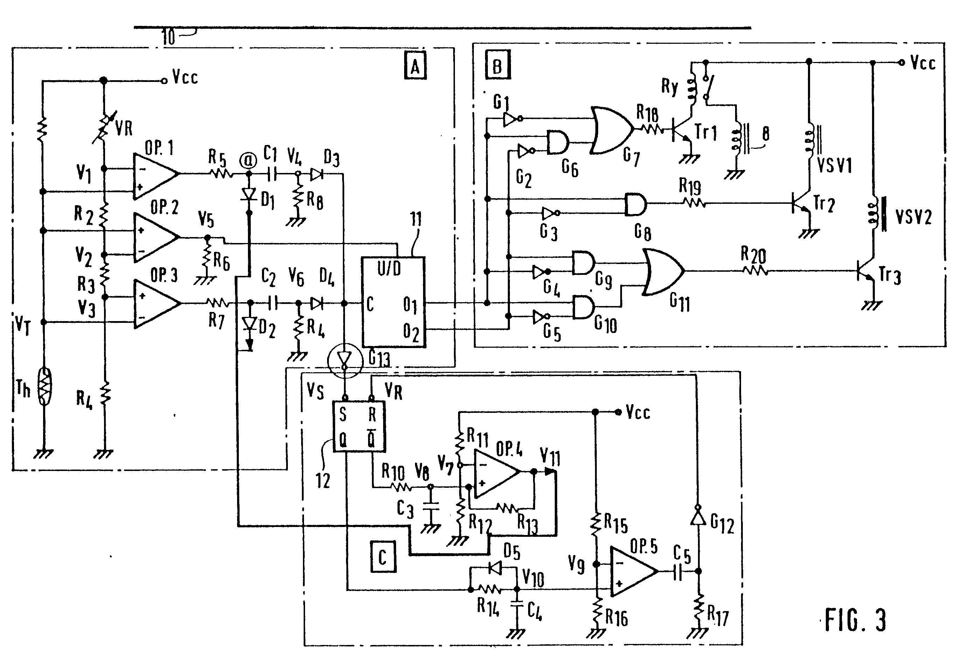

In the preferred embodiment, compressor 1 is a scroll type compressor including a variable displacement device 9. Compressor 1 is controlled by operation of magnetic clutch 8 which controls the operation thereof and the variable displacement device 9 which changes the cooling capacity of the compressor. Magnetic clutch 8 and variable displacement device 9 are controlled by operation of control circuit 10, which is described in further detail below in connection with Figure 3.

As mentioned above, compressor 1 includes variable displacement device 9 which is capable of changing the cooling capacity of the compressor. The capacity of the compressor shown in Figure 1 can be changed to one of three conditions, i.e., $CC_1$, $CC_2$ or $CC_3$, as shown in Figure 2. Variable displacement device 9 of compressor 1 includes at least one valve. This valve is controlled by a solenoid. In the embodiment of the present invention, variable displacement device 9 of compressor 1 has two valves and two solenoids $VSV_1$ and $VSV_2$ as shown in Figure 3. Solenoids $VSV_1$ and $VSV_2$ are connected to voltage source Vcc through control circuit 10.

The relationship between the operation of solenoids $VSV_1$ and $VSV_2$ and the cooling capacity of compressor 1 as shown in Figure 2, is given in Table 1 below:

TABLE I

|  | $VSV_1$ | $VSV_2$ | Reduction ratio of compressed volume |
|---|---|---|---|
| $CC_1$ | closed | closed | 100% |
| $CC_2$ | closed | open | 70% |
| $CC_3$ | open | open | 40% |

Referring to Figure 3, a circuit diagram of control circuit 10 for controlling the operation of magnetic clutch 8 and variable displacement device 9 of compressor 1 is shown. The control circuit includes a temperature detecting circuit A which detects the temperature of blown air from evaporator 5. The detected

3

temperature is compared with predetermined temperature levels to generate signals for controlling magnetic clutch 8 and variable displacement device 9 through the operation of solenoids $VSV_1$ and $VSV_2$ as shown in circuit B. Temperature detecting circuit A includes temperature sensing thermistor Th and comparators $OP_1$, $OP_2$ and $OP_3$. Thermistor Th is mounted on the air outlet of evaporator 5 for detecting the temperature of the blown air. In detecting circuit A, reference voltages $V_3$ and $V_1$ are set by variable resistor VR through voltage divider network $R_2$, $R_3$ and $R_4$ in accordance with predetermined temperatures Tu and Td. That is, the predetermined temperatures Tu and Td are set by adjusting the resistance of variable resistor $V_R$. Reference voltages $V_3$ and $V_1$ establish the upper temperature (Tu) and lower temperature (Td) levels of the air blown from evaporator 5 at which the outputs of comparators $OP_3$ and $OP_1$ change voltage levels, respectively.

The outputs of comparators $OP_1$ and $OP_3$ are coupled to clock terminal C of up/down counter 11 via respective coupling networks. The coupling network of $OP_1$ includes resistors $R_5$ and $R_8$, diodes $D_1$ and $D_3$ and capacitor $C_1$. The coupling network of $OP_3$ similarly includes resistors $R_7$ and $R_4$, diodes $D_2$ and $D_4$ and capacitor $C_2$. Capacitors $C_1$ and $C_2$ of each respective coupling network convert the high voltage output signals of comparators $OP_1$ and $OP_3$ to a pulse signal which is used to drive clock terminal C of counter 11. Output voltage $V_5$ of comparator $OP_2$ is coupled to the up/down terminal input of counter 11 and determines whether counter 11 counts in an upward or a downward direction in response to the pulse signals from capacitors $C_1$ and $C_2$. When the up/down terminal of counter 11 is at a high voltage level, counter 11 counts in an upward direction and when the up/down terminal is at a low level, counter 11 counts in a downward direction. Resistor $R_6$ at the output of comparator $OP_2$ provides the proper biasing for the up/down terminal of counter 11. The output of counter 11 is provided at output terminals $O_1$ and $O_2$ in binary format.

In this embodiment of the invention, reference voltage $V_2$ of comparator $OP_2$ is set between reference voltages $V_1$ of comparator $OP_1$ and reference voltage $V_3$ of comparator $OP_3$. Therefore, when the output of comparator $OP_1$ is at a high voltage level, the output of comparator $OP_2$ is also at a high voltage level. Accordingly, the pulse signal generated by the changing of the output voltage level of comparator $OP_1$ is counted in the upward direction by counter 11 while the pulse signal generated by the changing of the output voltage level of comparator $OP_3$ is counted in the downward direction since the voltage level of the up/down terminal of counter 11 is then at a low state.

Control circuit 10 further includes logic circuit B for controlling the operation of magnetic clutch 8 and solenoids $VSV_1$ and $VSV_2$ in accordance with the outputs of counter 11. The operation of magnetic clutch 8 is controlled by the operation of relay Ry. Relay Ry is connected to the collector of NPN type transistor $Tr_1$ which is in turn connected in series with magnetic clutch 8. When transistor $Tr_1$ conducts, relay Ry is energized so that magnetic clutch 8 actuates compressor 1. The base of transistor $Tr_1$ is connected to counter 11 via a logic circuit including OR gate $G_7$, AND gate $G_6$ and converters $G_1$ and $G_2$. Resistor $R_{18}$ is connected between the base of transistor $Tr_1$ and OR gate $G_7$ to provide proper biasing.

The operation of solenoids $VSV_1$ and $VSV_2$ is controlled by NPN type transistors $Tr_2$ and $Tr_3$. The collector of each transistor is connected in series with solenoids $VSV_1$ and $VSV_2$, respectively. When transistor $Tr_2$ and $Tr_3$ conducts, solenoids $VSV_1$ and $VSV_2$ actuate valves in variable displacement device 9 for changing the displacement of compressor 1. The base of transistor $Tr_2$ is coupled to counter 11 via AND gate $G_8$ and inverter $G_3$. The base of transistor $Tr_3$ is coupled to counter 11 via OR gate $G_{11}$, AND gates $G_9$ and $G_{10}$ and inverters $G_4$ and $G_5$. Resistors $R_{19}$ and $R_{20}$ provide proper biasing for transistors $Tr_2$ and $Tr_3$, respectively.

The operation of magnetic clutch 8 and solenoids $VSV_1$ and $VSV_2$ is in accordance with the outputs $O_1$ and $O_2$ of counter 11 as shown below in Table II where "0" represents a low level voltage output and "1" represents a high level voltage output.

TABLE II

| Output terminal | | Solenoid | | Clutch | Reduction ratio of compressed volume |
|---|---|---|---|---|---|
| $O_1$ | $O_2$ | $VSV_1$ | $VSV_2$ | Mg | |
| 0 | 0 | closed | closed | ON | 100% |
| 0 | 1 | closed | open | ON | 70% |
| 1 | 0 | open | open | ON | 40% |
| 1 | 1 | closed | closed | OFF | 0% |

In control circuit 10, a pulse signal at terminal C of counter 11 is generated by the output of comparator $OP_1$ when temperature Te of the blown air at evaporator 5, as detected by thermistor Th, decreases from a high level to predetermined lower temperature level Td. This pulse signal changes the count of counter 11 which ultimately reduces the capacity of the compressor by operation of circuit B. Likewise a pulse signal is generated at terminal C of counter 11 by the output of comparator $OP_3$ when temperature Te increases to upper predetermined temperature level Tu in response to the reduction in compressor capacity described above. Thus, the cooling capacity of compressor 1 can be continuously controlled by these two pulse signals.

Control circuit 10 also includes auxiliary circuit C which is responsive to the pulse signal generated by the outputs of comparators $OP_1$ and $OP_3$ through inverter $G_{13}$. The minimum cooling capacity or compression volume of compressor 1 for keeping the desired temperature of a room or compartment is determined by auxiliary circuit C. Circuit C includes RS flip-flop 12 with outputs Q and $\bar{Q}$ connected to comparators $OP_4$ and $OP_5$ via respective coupling networks $R_{10}$ and $C_3$ and $D_5$, $R_{14}$ and $C_4$. Resistors $R_{11}$, $R_{12}$ and $R_{13}$ establish reference voltage $V_7$ for comparator $OP_4$ and the voltage $V_7$ is compared with the output voltage $V_8$ of output $\bar{Q}$ of flipflop 12. Also resistors $R_{15}$ and $R_{16}$ establish reference voltage $V_9$ for comparator $OP_5$ and the voltage $V_9$ is compared with the output voltage $V_{10}$ of output Q of flip-flop 12. The output of comparator $OP_5$ is coupled via capacitor $C_5$ and resistor $R_{17}$ to the reset terminal of flip-flop 12 through inverter $G_{12}$. The output of comparator $OP_4$ is coupled to the cathodes of diodes $D_1$ and $D_2$ of circuit A.

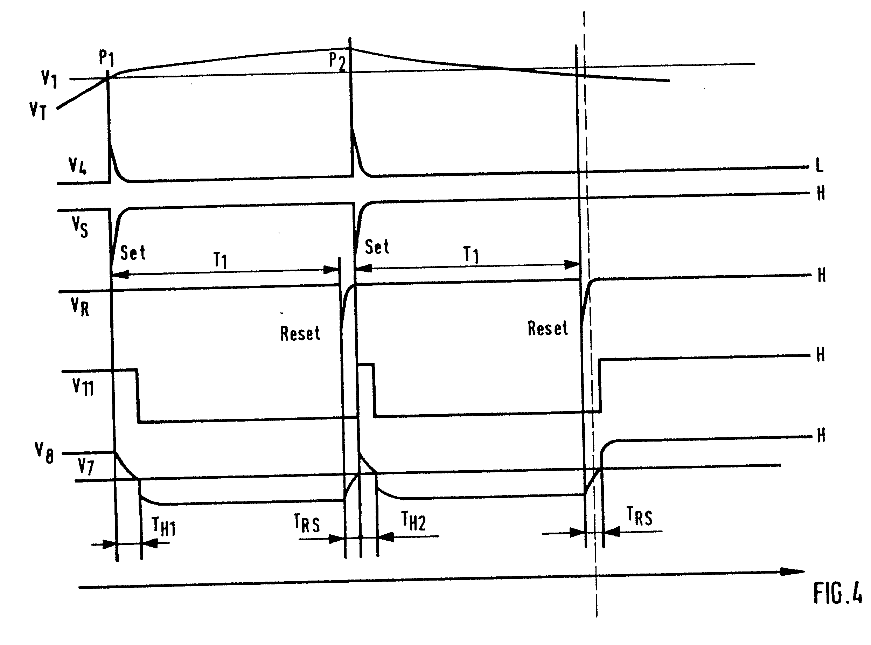

The operation of auxiliary circuit C will be described with reference to Figures 3 and 4. When the air conditioner is first started, temperature Te of the blown air in evaporator 5 is high so that voltage $V_T$, which is inversely related to temperature Te, is lower than reference voltage $V_3$ applied to the non-inverting input terminal (+) of comparator $OP_3$. The output of comparator $OP_3$ is at a high voltage level and the outputs of comparators $OP_1$ and $OP_2$ are at a low voltage level. During this initial state, compressor 1 is driven with large cooling capacity or volume $CC_1$ as shown in Figure 2 so that the desired room temperature is quickly reached. As voltage $V_T$ then increases in accordance with the lowering of temperature Te of the blown air as shown in Figure 4. As the operation of the air conditioner continues, voltage $V_T$ continues to increase in response to decreasing temperature Te. Voltage $V_T$ rises above voltage $V_3$ and $V_2$ and finally reaches voltage $V_1$ which is related to lower predetermined temperature level Td and is shown as point $P_1$ in Figure 4. When this occurs, the output voltage of comparator $OP_1$ changes to a high voltage level. As a result, a pulse signal is generated by capacitor $C_1$ and is provided to clock terminal C of counter 11. This pulse signal is shown as $V_4$ in Figure 4. Because counter 11 is in the up-count mode by virtue of the output of comparator $OP_2$ being at a high voltage level, the voltage of output terminal $O_2$ of counter 11 changes to a high voltage level as shown in Table II. Thus, the compression volume of compressor 1 is changed from large volume $CC_1$ to middle volume $CC_2$ as also shown in Table II.

The pulse signal which is generated by capacitor $C_1$ is inverted by inverter $G_{13}$, as shown by waveform $V_s$ in Figure 4, and is input to set terminal S of flip-flop circuit 12. During this period of time, the voltage at point a of the output line of comparator $OP_1$ is held to a low voltage level for a predetermined time delay $T_1$, e.g., five seconds. Delay $T_1$ is established by comparator $OP_4$ and a timer circuit which includes comparator $OP_5$. Prior to pulse $V_s$ being applied to terminal S of flip-flop 12, flip-flop 12 is in a reset condition with output terminal $\bar{Q}$ held to a high voltage level and output terminal Q held to a low voltage level. Therefore, output voltage $V_{11}$ of comparator $OP_4$ is at a high level and the output voltage of comparator $OP_5$ is at a low level. When pulse signal $V_s$ is applied to terminal S of flip-flop 12, the voltage levels of outputs Q and $\bar{Q}$ change to high and low, respectively. After time delay $Th_1$ which is established by a time constant circuit comprising capacitor $C_3$ and resistor $R_{10}$, output voltage $V_{11}$ of comparator $OP_4$ changes to a low level. That is, as shown in Fig. 4, voltage $V_8$ is gradually reduced due to discharge of capacitor $C_3$ and, when voltage $V_8$ is below the reference voltage $V_7$, output voltage $V_{11}$ of comparator $OP_4$ changes to a low level. The presence of time delay $TH_1$ prevents the changing of output voltage $V_{11}$ of comparator $OP_4$ from interfering with the pulse signal present at point a of the output line of comparator $OP_1$ when its output changes from a low to a high voltage level.

After time delay $T_1$, the output voltage of comparator $OP_5$ changes to a high level and a reset signal is generated by capacitor $C_5$, shown as VR in Figure 4, and is provided to reset the terminal R of flip-flop circuit 12 via inverter $G_{12}$. Accordingly, flip-flop 12 is reset to the state where output terminal Q is at a low voltage level and output terminal $\bar{Q}$ is at a high voltage level. Output voltage $V_{11}$ of comparator $OP_4$ also changes to a high voltage level after time delay $T_{RS}$ which is established by the time constant circuit. That is, the voltage $V_8$ is gradually increased due to charge of capacitor $C_3$ and, when the voltage $V_8$ exceeds the reference voltage $V_7$, the output voltage $V_{11}$ changes to a high voltage level.

When output voltage $V_{11}$ of comparator $OP_4$ changes to a high voltage level, the voltage level at point a—, which was kept at a low level by the previously low output of comparator $OP_4$— in spite of the high output level of comparator $OP_1$— is changed to a high voltage level. Therefore, another pulse signal is generated by capacitor $C_1$ and is provided to clock terminal C of counter 11. Because counter 11 is still in the up count mode, the output of counter 11 reflects a binary count of 2 where terminal $O_2$ is at a low level and terminal $O_1$ is at a high level. The cooling capacity or volume of compressor 1 is thus lowered to a 40% ratio as shown in Table II.

The pulse signal generated at capacitor $C_1$ by output voltage $V_{11}$ of comparator $OP_4$ changing to a high voltage level is also fed to terminal S of flip-flop 12. The operation of auxiliary circuit C is thereafter repeated as above described. However, after point $P_2$ of Figure 4 is passed, i.e., temperature Te of the blown air increases due to a reduction of the cooling capacity of compressor 1, voltage $V_T$ gradually

**0 118 573**

decreases as shown in Figure 4. Therefore, if the output of $OP_2$ is changed to a low voltage level for predetermined time delay $T_1$ due to the decrease of voltage $V_T$, the up counting pulse signal is not generated so that counter 11 is reset for receiving a down counting pulse signal.

In this situation, as temperature Te increases to upper temperature level Tu, the output of comparator $OP_3$ is changed to a high voltage level due to the decrease of voltage $V_T$ and a pulse signal $V_6$ is generated by capacitor $C_2$ and input to clock terminal C of counter 11. At this time, while up/down terminal of counter 11 is at a low state, the pulse signal generated by the output of comparator $OP_3$ is counted as a down count. Thus, output terminals $O_1$, $O_2$ of counter 11 are changed, i.e., terminal $O_1$ is low and terminal $O_2$ is high. The cooling capacity of compressor 1 is increased as mentioned above with reference to Table II.

The above description explains the situation where variable displacement device 9 operates continuously to maintain the temperature around lower temperature Td. The continuous operation around higher temperature Tu can also be accomplished in a similar manner.

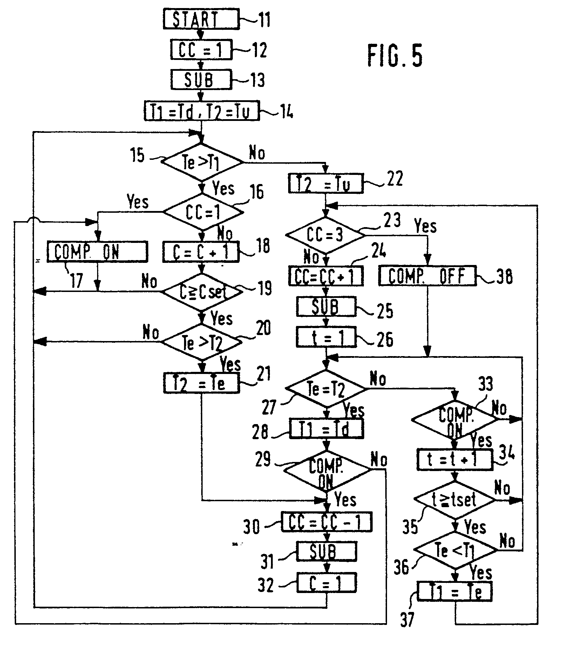

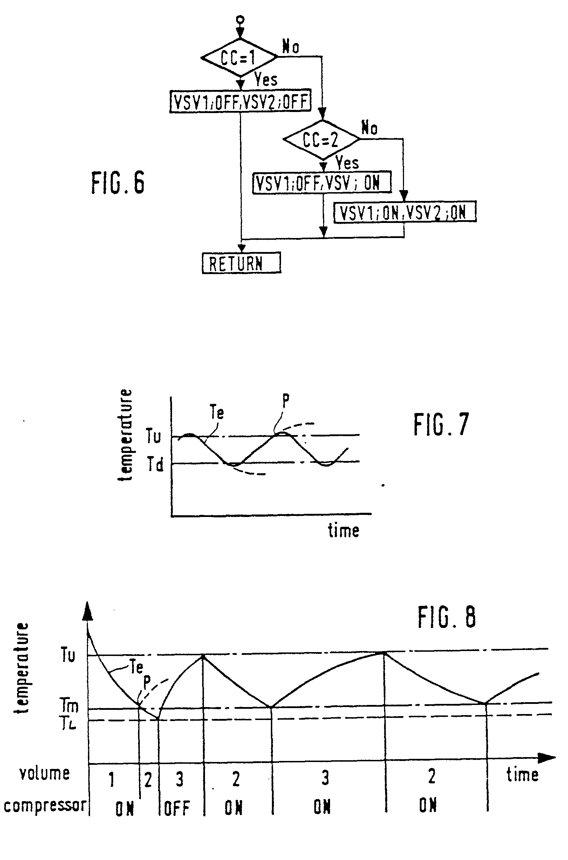

Although the present invention has been described with reference to a control circuit comprising discrete components, as shown in Figure 3, the underlying principles of the invention may also be implemented using a microprocessor selected from conventional microprocessors currently known in the art. A microprocessor based control circuit 10 will now be decribed with reference to the flow diagram shown in Figure 5. When a main switch (not shown) is actuated to connect the voltage source at start step 11, control circuit 10 is ready for operation. Step 12 determines the compression volume of compressor 1, such as large volume $CC_1$, to which the air conditioning system will be initially set. After determining the initial compression volume, the operation of control circuit 10 proceeds to step 13 which is a subroutine for controlling solenoids $VSV_1$ and $VSV_2$ for actually setting the compression volume, as shown in Figure 6. Step 14 sets lower predetermined temperature $T_1$ (=Td) which is the temperature at which variable displacement device 9 operates to reduce the compressor volume. Step 14 also sets higher predetermined temperature $T_2$ (=Tu) which is the operating temperature at which variable displacement device 9 operates to increase the volume of compressor 1.

After setting lower and higher temperature $T_1$ and $T_2$, respectively, the operation of control circuit 10 proceeds to step 15. At step 15, temperature Te of the air blown into the compartment is detected and compared with lower predetermined temperature Td from detecting circuit A of control circuit 10. If temperature Te is higher than lower predetermined temperature Td, operation of control circuit 10 proceeds to step 16 which determines the current volume of compressor 1. If the volume of compressor 1 is set to large volume $CC_1$, the operation of control circuit 10 proceeds to step 17 and compressor 1 continues to be driven with large volume $CC_1$. While Te remains higher than temperature Td, the operation of control circuit 10 continuously flows back through closed loop steps 15, 16, 17 and back to 15 to continue the operation of compressor 1 with large volume $CC_1$.

When temperature Te of the blown air is equal to lower predetermined temperature Td, the operation of control circuit 10 flows from step 15 to steps 22 and 23. At step 23, the compression volume of compressor 1 is compared with the smallest volume $CC_3$ of compressor 1 and if the present volume of compressor 1 is larger than volume $CC_3$, step 23 flows to step 25 which operates to reduce the volume of compressor 1 through the operation of solenoids $VSV_1$ and $VSV_2$ of variable displacement device 9 by logic circuit B of control circuit 10. Step 24 flows to step 25 which is the same subroutine as shown in Figure 6. After reducing the compression volume from large volume $CC_1$ to middle volume $CC_2$, step 25 flows to step 26 which operates the setting of the time delay used by circuit C of control circuit 10. At step 27, temperature Te of the blown air is detected and compared with higher predetermined temperature Tu. If temperature Te is lower than the predetermined temperature Tu, step 27 proceeds to steps 33 and 34. The operation of control circuit 10 then continuously flows back through closed loop steps 35, 27, 33 and 34 until the end of predetermined time delay t which is set in step 26. After time delay t, if temperature Te of the blown air has increased higher than predetermined temperature Tu, step 27 proceeds to step 28, 29, 30, 31 and 32. In step 32, the compression volume of compressor 1 is returned to large volume $CC_1$ from middle volume $CC_2$ because the refrigerating capacity of compressor 1 with middle volume $CC_2$ is insufficient for the refrigeration load.

The above described flow chart explains the operation of temperature control circuit 10 when changing the compression volume to middle volume $CC_2$ from large volume $CC_1$ or to large volume $CC_1$ from middle volume $CC_2$. In control circuit 10, once predetermined time delay t, as set at step 26 is over during the closed loop of steps 35, 27, 33 and 34, step 35 proceeds to step 36. Step 36 compares the temperature Te of the blown air with the lower predetermined temperature Td. If temperature Te of the blown air is lower than predetermined temperature Td, step 36 proceeds to steps 37, 23 and 24 where the compression volume is reduced. If, however, temperature Te of the blown air is higher than lower predetermined temperature Td, step 36 flows back to step 27 and the compressor is driven with the present compression volume. In this situation, temperature Te of the blown air is maintained within a range between temperature $T_1$ (Td) and $T_2$ (Tu).

Compressor 1 is driven with smaller volume $CC_3$ at step 25, and predetermined time delay t is set at step 26. During time delay t, the operation of control circuit 1 flows through closed loop steps 27, 33, 34, 35 and 27 to detect the change in temperature of the blown air, Te. When temperature Te increases above predetermined temperature Td, this indicates that the refrigerating capacity is insufficient for the refrigeration load, and the operation of control circuit 1 flows to step 28, 29, 30 and 31, where smaller

6

compression volume $CC_3$ is returned to middle volume $CC_2$ and then the operation proceeds to step 15. If temperature Te of the blown air is still lower than lower predetermined temperature Td, this indicates that the refrigerating capacity is higher than necessary for the refrigeration load and step 37 proceeds to steps 23 and 39. At step 39, the compressor is stopped by the operation of magnetic clutch 9 using logic circuit B in control circuit 10. However, if temperature Te of the blown air is higher than lower predetermined temperature Td, the operation of the compressor 1 is continued with smaller volume $CC_3$ due to the return to step 27.

The operation of step 37 temporarily replaces lower predetermined temperature Td. The changing of compression volume is started at the moment that the temperature Te of the blown air reaches lower predetermined temperature Td. After changing the volume, if the refrigerating capacity is higher than necessary, reduction of temperature Te of the blown air is still continued so that another changing point for operating the variable displacement device to reduce the compression volume must be set. The changing of compression volume is started at the moment temperature Te of the blown air reaches temperature $Td-\alpha$ which is lower than first determined temperature Td. Therefore, the refrigerating capacity of smaller volume $CC_3$ of compressor 1 must be compared with temperature $Td-\alpha$. If, in step 36, the control circuit detects that the refrigerating capacity of compressor 1 is higher, step 36 proceeds to step 37 to determine another lower predetermined temperature T1. However, this temporary lower predetermined temperature will be set back to its primary temperature at step 28.

Furthermore, the operation of the compressor is stopped at step 38 and temperature Te of the blown air increases and the operation of the control circuit flows to closed loop steps 27, 33 and 37, and proceeds to closed loop steps 27, 28, 29 and 17. Therefore, operation of the compressor with a smaller volume $CC_3$ is controlled.

The operation of control circuit 10, particularly, its operation after step 18 will be described with reference to Figures 5 and 7. In Figure 7, when the compressor is driven with middle volume $CC_2$ or smaller volume $CC_3$, the refrigerating capacity of compressor 1 is insufficient at point P by changing of operating conditions, for example, driving speed of compressor is reduced, the temperature of the blown air is increased as shown by the dotted line in Figure 7. In this case, step 18 proceeds to step 19 which sets the timer mechanism to determine the predetermined time C to prevent the unnecessary changing of compression volume in order to prevent the blowing of warm air. Step 19 proceeds back to step 15 and to closed loop steps 15, 16, 18, 19, and 15. Since the operation flow after point 18 operates to increase the compression volume in the step 16, the compression volume of compressor 1 is detected. In step 16, if compressor 1 is driven with large volume $CC_1$, the operation flow after step 18 is prevented.

During the closed loop of steps 15, 16, 18, 19 and 15, predetermined time C is over, step 19 then proceeds to step 20 which compares temperature Te of the blown air with higher predetermined temperature Tu. At step 20, if temperature Te of the blown air is higher than higher predetermined temperature Tu, the refrigerating capacity of compressor 1 is insufficient for the refrigeration load and step 20 proceeds to steps 21, 30 and 31 where the refrigerating capacity of compressor 1 is increased at step 31.

The operation of step 21 has the same function as the step 27 and temporarily determined temperature $T_2$ is set back to its primary predetermined temperature, at step 22.

Referring to Figure 8, another embodiment of the invention is shown. In this embodiment, control circuit 10 establishes three different temperatures; Tu, Tm and TL which are used to control the operation of magnetic clutch 8 and variable displacement device 9. The higher predetermined temperature Tu is the starting point of operation of magnetic clutch 8 and is also the point where compression volume is changed to a larger volume from a smaller volume. The middle predetermined temperature Tm is the changing point of the compression volume to a smaller volume from a larger volume and lower predetermined temperature TL is the stopping point of the operation of magnetic clutch 8 and also the changing point of compression volume to a smaller volume from a larger volume.

As shown in Figure 8, temperature Te of blown air is decreased by the operation of the compressor, which has a large volume $CC_1$, and reaches middle predetermined temperature Tm (this state is shown at point P in Figure 8). The compression volume of the compressor then changes to middle volume $CC_2$ from large volume $CC_1$. If the refrigerating capacity of compressor 1 is insufficient in comparison to the refrigeration load, temperature Te increases, as shown by the dotted line in Figure 8. Therefore, the temperature Te keeps within the range of determined temperature Tu and Tm in order to change the volume of compressor 1 between large volume $CC_1$ and middle volume $CC_2$.

On the other hand, if refrigerating capacity of compressor 1 is higher than the refrigeration load, temperature Te decreases until it reaches lower predetermined temperature $T_L$. The operation of compressor 1 is then stopped by the operation of magnetic clutch 8 and compression volume changes to small volume $CC_3$.

**Claims**

1. A control device (10) in an air conditioning system comprising control means (A, B, C) for changing the cooling capacity of said air conditioning system, said control means (A, B, C) comprising an evaluating means (A) including a temperature detecting means (Th) for producing a temperature signal ($V_T$), a first comparing means ($OP_2$) for comparing said temperature signal ($V_T$) with a first reference voltage ($V_2$)

relating to a first predetermined temperature level and producing a first signal $(V_5)$, and an up/down counting means (11) responsive to said first signal $(V_5)$ for binary counting up and down when said first signal $(V_5)$ is in a first state and in a second state, respectively, and providing a control signal $(O_1, O_2)$, and logic circuit means (B) responsive to said control signal $(O_1, O_2)$ for generating a plurality of enabling signals for changing said cooling capacity of said air conditioning system, characterized by

— said air conditioning system comprising a compressor (1) with a variable displacement device (9),
— said evaluating means (A) comprising a second comparing means $(OP_1)$ comparing said temperature signal $(V_T)$ with a second reference voltage $(V_1)$ relating to a second predetermined temperature level (Tu) and providing a second signal, and a third comparing means $(OP_3)$ comparing said temperature signal $(V_T)$ with a third reference voltage $(V_3)$ relating to a third predetermined temperature level (Td) and providing a third signal, the second and third signals being fed to the clock input of the counting means (11),
— timing means (C) coupled to said counting means (11) and said second and third comparing means $(OP_1, OP_3)$ for generating a fourth signal $(V_{11})$ a predetermined time $(Th_1)$ after generation of said second and third signals, respectively,
— said counting means (11) counting said second and third signals in response to said first signal $(V_5)$,
— said logic circuit means (B) generating said enabling signals for enabling actuating means $(VSV_1, VSV_2)$ for energizing the variable displacement device (9) in the compressor (1) to change the capacity of said compressor (1).

2. A control device as claimed in claim 1, characterized by said actuating means $(VSV_1, VSV_2)$ comprising a first valve $(VSV_1)$ and a second valve $(VSV_2)$, said logic circuit means (B) being responsive to said control signal $(O_1, O_2)$ of the binary count for generating the said plurality of enabling signals for enabling said first and second valves $(VSV_1, VSV_2)$ to change the capacity of the compressor (1).

**Patentansprüche**

1. Steuereinrichtung (10) für eine Klimaanlage mit einer Steuereinheit (A, B, C) zum Ändern der Kühlkapazität der Klimaanlage, wobei die Steuereinheit (A, B, C) eine Auswerteeinheit (A) mit einer Temperaturerfassungseinrichtung (Th) zum Erzeugen eines Temperatursignales $(V_T)$, eine erste Vergleichseinrichtung $(OP_2)$ zum Vergleichen des Temperatursignales $(V_T)$ mit einer ersten Vergleichsspannung $(V_2)$, die mit einem ersten vorbestimmten Temperaturpegel in Beziehung steht, und Erzeugen eines ersten Signales $(V_5)$, und einer auf das erste Signal $(V_5)$ reagierende Vorwärts-Rückwärts-Zähleinrichtung (11) zum binären Vorwärts- und Rückwärtszählen, wenn das erste Signal $(V_5)$ sich in einem ersten Zustand bzw. in einem zweiten Zustand befindet, und Vorsehen eines Steuersignales $(O_1, O_2)$ und eine auf das Steuersignal $(O_1, O_2)$ reagierende logische Schalteinrichtung (B) zum Erzeugen einer Mehrzahl von Freigabesignalen zum Ändern der Kühlkapazität der Klimaanlage aufweist, dadurch gekennzeichnet

— daß die Klimaanlage einen Kompressor (1) mit einer variablen Verdrängungsvorrichtung (9) aufweist,
— daß die Auswerteeinheit (A) eine zweite Vergleichseinrichtung $(OP_1)$, die das Temperatursignal $(V_T)$ mit einer zweiten Vergleichsspannung $(V_1)$, die mit einem zweiten vorbestimmten Temperaturpegel (Tu) in Beziehung steht, vergleicht und ein zweites Signal vorsieht, und eine dritte Vergleichseinrichtung $(OP_3)$, die das Temperatursignal $(V_T)$ mit einer dritten Vergleichsspannung $(V_3)$, die mit einem dritten vorbestimmten Temperaturpegel (Td) in Beziehung steht, vergleicht und ein drittes Signal vorsieht, wobei das zweite und dritte Signal dem Takteingang der Zähleinrichtung (11) zugeführt werden, aufweist,
— daß eine mit der Zähleinrichtung (11) und der zweiten und dritten Vergleichseinrichtung $(OP_1, OP_3)$ gekoppelte Zeitgebereinrichtung (C) vorgesehen ist zum Erzeugen eines vierten Signales $(V_{11})$ eine vorbestimmte Zeit (Th1) nach Erzeugung des zweiten bzw. dritten Signales,
— daß die Zähleinrichtung (11) das zweite und dritte Signal als Reaktion auf das erste Signal $(V_5)$ zählt,
— daß die logische Schalteinrichtung (B) die Freigabesignale zum Freigeben einer Betätigungseinrichtung $(VSV_1, VSV_2)$ zum Erregen der variablen Verdrängungsvorrichtung (9) in dem Kompressor (1) zum Ändern der Kapazität des Kompressors (1) erzeugt.

2. Steuereinrichtung nach Anspruch 1, dadurch gekennzeichnet, daß die Betätigungseinrichtung $(VSV_1, VSV_2)$ ein erstes Ventil $(VSV_1)$ und ein zweites Ventil $(VSV_2)$ aufweist, wobei die logische Schalteinrichtung (B) auf das Steuersignal $(O_1, O_2)$ der Binärzählung reagierend gebildet ist zum Erzeugen der Mehrzahl von Freigabesignalen zum Freigeben des ersten und zweiten Ventiles $(VSV_1, VSV_2)$ zum Ändern der Kapazität des Kompressors (1).

**Revendications**

1. Dispositif de commande (10) pour système d'air conditionné comprenant des moyens de commande (A, B, C) pour changer la capacité de refroidissement du système d'air conditionné, ces moyens de commande (A, B, C) comprenant des moyens d'évaluation (A) incluant un dispositif de détection de température (Th) pour produire un signal de température ($V_T$), un premier dispositif de comparaison ($OP_2$) pour comparer ce signal de température ($V_T$) à une première tension de référence ($V_2$) relative à un premier niveau de température prédéterminé, et pour produire un premier signal ($V_5$), et un dispositif de comptage montant/descendant (11) répondant au premier signal ($V_5$) pour effectuer un comptage binaire montant et descendant lorsque le premier signal ($V_5$) se trouve respectivement dans un premier état et dans un second état, et pour fournir un signal de commande ($O_1$, $O_2$), et des moyens de circuit logique (B) répondant au signal de commande ($O_1$, $O_2$) pour produire un certain nombre de signaux de déclenchement permettant de modifier la capacité de refroidissement du système d'air conditionné, dispositif de commande caractérisé en ce que:

— le système d'air conditionné comprend un compresseur (1) muni d'un dispositif à décalage variable (9);
— les moyens d'évaluation (A) comprennent un second dispositif de comparaison ($OP_1$) comparant le signal de température (Vt) à une seconde tension de référence ($V_1$) relative à un second niveau de température prédéterminé (Tu) et fournissant un second signal, et un troisième dispositif de comparaison ($OP_3$) comparant le signal de température ($V_T$) à une troisième tension de référence ($V_3$) relative à un troisième niveau de température prédéterminé (Td) et fournissant un troisième signal, les second et troisième signaux étant envoyés à l'entrée d'horloge des moyens de comptage (11);
— des moyens de temporisation (C) sont couplés aux moyens de comptage (11) et au second et troisième dispositif de comparaison ($OP_1$, $OP_3$) pour produire un quatrième signal ($V_{11}$) au bout d'un intervalle de temps prédéterminé (Th1) après la production des second et troisième signaux respectifs;
— les moyens de comptage (11) comptent les second et troisième signaux en réponse au premier signal ($V_5$); et
— les moyens de circuit logique (B) produisent les signaux de déclenchement permettant de déclencher les moyens de manoeuvre ($VSV_1$, $VSV_2$) pour exciter le dispositif à décalage variable (9) du compresseur (1), de manière à modifier la capacité de ce compresseur (1).

2. Dispositif de commande selon la revendication 1, caractérisé en ce que les moyens de manoeuvre ($VSV_1$, $VSV_2$) comprennent une première soupape ($VSV_1$) et une seconde soupape ($VSV_2$), les moyens de circuit logique (B) répondant aux signaux de commande ($O_1$, $O_2$) du comptage binaire pour produire les différents signaux de déclenchement permettant de déclencher les première et seconde soupapes ($VSV_1$, $VSV_2$) pour modifier la capacité du compresseur (1).

FIG.1

FIG. 2

FIG. 3

0 118 573

FIG.4

# FIG. 5

START — 11

CC = 1 — 12

SUB — 13

T1 = Td , T2 = Tu — 14

15 — Te > T1 — No → T2 = Tu — 22

Yes

16 — Yes — CC = 1

No

COMP. ON — 17

C = C + 1 — 18

C ≥ Cset — 19 — No

Yes

20 — Te > T2 — No

Yes

T2 = Te — 21

CC = 3 — 23 — Yes → COMP. OFF — 38

No

CC = CC + 1 — 24

SUB — 25

t = 1 — 26

Te = T2 — 27 — No → COMP. ON — 33 — No

Yes

T1 = Td — 28

COMP. ON — 29 — No

Yes

CC = CC - 1 — 30

SUB — 31

C = 1 — 32

t = t + 1 — 34

t ≥ tset — 35 — No

Yes

Te < T1 — 36 — No

Yes

T1 = Te — 37

4

FIG.6

FIG.7

FIG.8